# EUROPÄISCHE PATENTSCHRIFT

(11) **EP 2 144 788 B1**
(45) Veröffentlichungstag und Bekanntmachung des Hinweises auf die Patenterteilung: **26.10.2011**
(21) Anmeldenummer: 08735321.5
(22) Anmeldetag: 18.04.2008
(51) Int. Cl.: B60R 21/02

(54) **Rückhaltesystem**
Retaining system
Système de retenue

(30) Priorität: 14.05.2007 DE 102007022925
(43) Veröffentlichungstag der Anmeldung: 20.01.2010
(73) Patentinhaber: Daimler AG, 70327 Stuttgart (DE)
(72) Erfinder: HIRTH, Andreas, 69234 Dielheim (DE); QUARG, Lutz, 71032 Böblingen (DE); REITER, Friedrich, 71069 Sindelfingen (DE); RÜDEBUSCH, Clark, 71088 Holzgerlingen (DE)
(74) Vertreter: JENSEN & SON
(86) Internationale Anmeldenummer: PCT/EP2008/003126
(87) Internationale Veröffentlichungsnummer: WO 2008/138447

(56) Entgegenhaltungen:
- DE-A1-102004 045 968
- DE-B3- 10 239 778
- DE-B3- 10 239 780
- US-A- 5 597 179
- US-A- 5 683 105

## Beschreibung

Die Erfindung betrifft ein Rückhaltesystem beispielsweise für ein Kraftfahrzeug mit den Merkmalen des Oberbegriffs des Patentanspruchs 1. Darüber hinaus betrifft die Erfindung ein Transportmittel, insbesondere ein Kraftfahrzeug, einen Kraftwagen, ein Flugzeug, ein Raumfahrzeug, ein Schienenfahrzeug oder dgl. mit einem derartigen Rückhaltesystem.

Beispielsweise aus dem Serienfahrzeugbau von Personenkraftwagen sind derartige Rückhaltesysteme in Form von Airbags in vielfacher Ausführung als bekannt zu entnehmen. Dabei weisen derartige Airbags im Allgemeinen ein durch eine Umhüllung begrenztes Rückhaltevolumen auf, welches aus einer Aufbewahrungsposition in eine Rückhalteposition vergrößerbar ist. Der in der Aufbewahrungsposition normalerweise zusammengefaltete Airbag wird dabei bei Detektierung eines Unfalls pyrotechnisch mit Gas befüllt, so dass er sich schlagartig auf den sich vorverlagernden Insassen hin entfaltet und somit zumindest mittelbar zu dessen Rückhaltung beiträgt. Demzufolge dient das üblicherweise mittels eines Gasgenerators in die Umhüllung eingebrachte Gas einerseits zur Entfaltung des Airbags und andererseits zur Erzielung der Rückhaltung der jeweiligen Person.

Allerdings ist es unter bestimmten Umständen problematisch, einen derartigen Gasgenerator einzusetzen. So gibt es Umgebungen - beispielsweise in der Luftfahrt - welche den Einsatz von solchen Gasgeneratoren verunmöglichen. Darüber hinaus sind andere ungünstige Einflüsse von derartigen Gasgeneratoren wie beispielsweise eine erhöhte Explosionsgefahr, erhöhte Kosten, ein erhöhtes Gewicht und ein erhöhtes Bauvolumen bekannt. Zudem können heutige Airbags in manchen Umgebungen nicht platziert werden, beispielsweise im Fond eines Personenkraftwagens, wenn dahinter Kinder oder Kleinkinder sitzen sollen. Ein weiterer Nachteil herkömmlicher Rückhaltesysteme ist es, dass diese nach einem Einsatz entsprechend kostenaufwändig ausgetauscht werden müssen.

In der US 5 597 179 A wird eine Vorrichtung und ein Verfahren zum Aufblasen eines Airbags in einem Fahrzeug beschrieben. Die Vorrichtung umfasst einen Energiespeicher für elektrische Energie, wie etwa eine Batterie, eine Vorrichtung zum Umwandeln der elektrischen Energie des Energiespeichers in mechanische Energie, wie etwa eine Spule, sowie eine Aufblasvorrichtung, wie etwa eine Aluminiumplatte, um mittels der umgewandelten Energie den Airbag aufzublasen. Vorgeschlagen wird etwa, dass bei einem erkannten Unfall des Fahrzeugs die Batterie mit der Spule verbunden wird, wodurch die in der Nähe der Spule befindliche Aluminiumplatte abgestoßen wird. Durch die Abstoßbewegung zieht die innerhalb des Airbags befindliche Aluminiumplatte den Airbag auf, wodurch Luft durch eine Öffnung des Airbags angesaugt wird. Ein Ventil in der Öffnung verhindert ein Ausströmen der innerhalb des Airbags befindlichen Luft aus der Öffnung heraus.

Die DE 10 2004 045 968 A1 zeigt eine Luftsackvorrichtung für ein Fahrzeug mit einem Luftsack und einer Gaszuführvorrichtung zum Zuführen von Gas in den Luftsack. Der Luftsack ist in einem hinteren Abschnitt des Dachs ' gefaltet und aufgenommen. Wenn Gas zugeführt wird, wird der Luftsack entlang eines hinteren Fensterglases des Fahrzeugs aufgebläht und entfaltet. Die Luftsackvorrichtung hat Ziehvorrichtungen zum Vorspannen des Luftsacks entlang der Entfaltungsrichtung.

In der DE 102 39 778 B3 wird ein Kaltgasgenerator mit einem Behälter beschrieben, der mit einem unter Druck stehenden Gas gefüllt ist und eine Ausströmöffnung aufweist. Ein verschiebbar im Behälter angeordneter Kolben mit einer Blendenöffnung unterteilt den Behälter in eine erste Kammer und eine zweite Kammer, wobei beide Kammern mit dem Gas gefüllt sind. Der Kolben bewegt sich bei einer Aktivierung des Kaltgasgenerators nach einer Freigabe der Ausströmöffnung durch den in der zweiten Kammer herrschenden Druck von einer vorbestimmten Anfangsposition in Richtung zur Ausströmöffnung in eine Endposition, in der das Volumen der ersten Kammer um mehr als 50% gegenüber der Anfangsposition verringert ist. In einer Ausführung wird vorgeschlagen, dass der Kolben innerhalb des Behälters mittels Federn fixiert wird, welche die Bewegung des Kolbens in einer Weiterbildung unterstützen und in einer anderen Weiterbildung die Bewegung des Kolbens dämpfen können.

In der US 5 683 105 A wird ein Gasgenerator beschrieben mit einem verstärkten Behälter, welcher mit einem inerten Druckgas, wie etwa Argon oder Stickstoff, gefüllt ist. Ein elektromagnetisch angetriebener Kolben drückt bei Ansteuerung des elektromagnetisch angetriebenen Kolbens das Druckgas aus dem Gasgenerator heraus in einen Airbag hinein.

Die DE 102 39 780 B3 offenbart einen Gasgenerator mit einem Behälter und einem im Behälter verschiebbar angeordneten Kolben, der den Behälter in eine erste Kammer und eine zweite Kammer unterteilt. Beide Kammern sind mit einem füllgaserzeugenden Fluid gefüllt. Der Kolben besteht wenigstens teilweise aus einem magnetischen Material. Eine axiale Anfangsposition des Kolbens kann über eine außerhalb des Behälters angeordnete Verstellvorrichtung eingestellt werden. Die Verstellvorrichtung stellt ein Magnetfeld bereit, das direkt auf den Kolben wirkt und diesen bewegt. Der Gasgenerator ist Teil eines Fahrzeuginsassen-Schutzsystems, das eine mit dem Gasgenerator verbundene Elektronikeinheit und wenigstens einen mit der Elektronikeinheit verbundenen Sensor aufweist. Die Elektronikeinheit veranlaßt eine Einstellung der axialen Anfangsposition des Kolbens in Abhängigkeit der vom Sensor gelieferten Daten.

Aufgabe der vorliegenden Erfindung ist es daher, ein Rückhaltesystem der eingangs genannten Art zu schaffen, welches in einem bedeutend breiteren Einsatzgebiet verwendet werden kann.

Diese Aufgabe wird erfindungsgemäß durch ein Rückhaltesystem mit den Merkmalen des Patentanspruchs 1 gelöst. Darüber hinaus wird diese Aufgabe auch durch ein Transportmittel mit einem derartigen Rückhaltesystem gemäß Anspruch 22 gelöst. Vorteilhafte Ausgestaltungen mit zweckmäßigen und nichttrivialen Weiterbildungen der Erfindung sind in den abhängigen Patentansprüchen angegeben.

Um ein Rückhaltesystem zu schaffen, welches in einem bedeutend breiteren Einsatzgebiet Verwendung finden kann, ist eine mechanische Vergrößerungseinrichtung vorgesehen, mittels welcher das Rückhaltevolumen in die Rückhalteposition verstellbar ist.

Es ist vorgesehen, die Vergrößerung des Rückhaltevolumens im Wesentlichen nicht durch einen Gasgenerator - durch eine damit einhergehende Entfaltung - zu bewerkstelligen, sondern das Rückhaltevolumen vielmehr auf mechanischem Weg - nämlich mittels der Vergrößerungseinrichtung - bereitzustellen.

Eine derartige mechanische Vergrößerungseinrichtung kann dabei auf einfache Weise durch geeignete mechanische Elemente wie zum Beispiel Stabelemente oder Federelemente bereitgestellt werden. Ein Vorteil einer derartigen mechanischen Vergrößerungseinrichtung ist es, dass diese beispielsweise auf einfache Art und Weise reversibel ausgebildet sein kann. Somit ist es beispielsweise möglich, bei einem drohenden Unfall bzw. einer bevorstehenden Kollision das Rückhaltesystem vorsorglich zu aktivieren bzw. in die Rückhalteposition zu verstellen, wobei dieses im Anschluss an die Gefahrensituation ohne Austausch auf relativ einfache und unkomplizierte Weise wieder in seine Aufbewahrungsposition zurück verstellt werden kann. Ein bei bisherigen Rückhaltesystemen mit hierzu verwendeten Gasgeneratoren erforderlicher Austausch der gesamten Einrichtung ist somit im Wesentlichen nicht mehr erforderlich.

Ein weiterer Vorteil einer derartigen mechanischen Vergrößerungseinrichtung ist es, dass eine Entkoppelung der Entfaltungs- und Rückhaltewirkung des Rückhaltesystems gegeben ist. Während das Entfalten bzw. das Überführen in die Rückhalteposition mittels der mechanischen Vergrößerungseinrichtung vonstatten geht, erfolgt die Rückhaltewirkung im Wesentlichen dadurch, dass das Rückhaltevolumen - vorzugsweise gebildet durch die umhüllte Umgebungsluft - zur Rückhaltung der zugehörigen Person verwendet wird. Die Rückhaltewirkung wird dabei vor allem über den Innendruck des Rückhaltevolumens erreicht. Dies kann über eine Abdichtung des Rückhaltevolumens - gegebenenfalls mit Ausströmöffnungen und/oder Undichtigkeiten zur Dämpfung - erfolgen. Trifft demzufolge die Person auf der Umhüllung des Rückhaltevolumens auf, so wird diese entsprechend dämpfend rückgehalten.

Durch die zumindest im Wesentlichen erfolgende Trennung bzw. Entkoppelung der Entfaltungs- von der Rückhaltewirkung ist es somit bei dem erfindungsgemäßen Rückhaltesystem möglich, dieses schon frühzeitig in die Rückhalteposition zu verstellen. Im Unterschied zu einem durch Gas aus einem Gasgenerator gebildeten Rückhaltevolumen ist es dabei erfindungsgemäß möglich, dieses Rückhaltevolumen eine theoretisch unbegrenzte Zeit dadurch bereitzustellen, dass die mechanische Vergrößerungseinrichtung entsprechend in die Rückhalteposition verlagert wird. Mit anderen Worten fällt das Rückhaltesystem somit im Unterschied zu einem mittels Gas befüllten System nicht zusammen.

Wird somit beispielsweise bei einem Kraftwagen ein Vorhersagesystem eingesetzt, mit welchem ein sich ankündigender Unfall bzw. Aufprall detektiert werden kann, so kann bereits frühzeitig das Rückhaltesystem in seine Rückhalteposition verstellt werden, ohne dass hierbei die Gefahr besteht, dass das Rückhaltevolumen frühzeitig zusammenfällt.

Ein weiterer Vorteil der Erfindung ist es, dass durch die mögliche reversible Gestaltung ein Vorhersagesystem nicht zu 100% sichere Entscheidungen treffen können muss. Somit kann das Rückhaltesystem auch bei weniger sicheren Vorhersagen ausgelöst werden, was die Einsatzmöglichkeiten und das Schutzpotential zusätzlich vergrößert. Bei der frühzeitigen Positionierung des Rückhaltesystems macht man sich den Grundgedanken zu Nutze, dass das Rückhaltevolumen - aufgrund beispielsweise der eingeströmten Umgebungsluft - eine hinreichende Dämpfung beispielsweise für die rückzuhaltende Person bereitstellen kann. Mit anderen Worten wird erfindungsgemäß die Rückhaltefunktion dadurch erfüllt, dass durch die Umhüllung das entsprechende Rückhaltevolumen - beispielsweise in Form von Umgebungsluft - entsprechend begrenzt ist, welches dann beispielsweise beim Auftreffen einer Person mittels Kompression der in dem Volumen enthaltenen Gase und gegebenenfalls einer Dämpfung durch Abströmmöglichkeiten für die Gase eine Rückhaltewirkung bereitstellen kann.

In weiterer Ausgestaltung der Erfindung hat es sich als zudem vorteilhaft gezeigt, wenn die Vergrößerungseinrichtung zur Vergrößerung des Rückhaltevolumens aus einer Aufbewahrungsposition in eine Rückhalteposition verstellbar ist. Mit anderen Worten wird erfindungsgemäß die Vergrößerung des Rückhaltevolumens vorteilhafterweise durch eine korrespondierende Vergrößerung der Vergrößerungseinrichtung erreicht. Dies kann in einfacher Weise beispielsweise dadurch erfolgen, dass die Umhüllung unmittelbar über die Vergrößerungseinrichtung gezogen wird.

In weiterer Ausgestaltung der Erfindung hat es sich als darüber hinaus vorteilhaft gezeigt, wenn die Vergrößerungseinrichtung eine Mehrzahl von Stabelementen, Rohren, Leisten oder dgl. umfasst, über welche die Umhüllung angeordnet ist. Durch derartige Stabelemente, Rohre oder Leisten kann auf einfache Weise ein entsprechendes Rückhaltevolumen bereitgestellt bzw. aufgespannt werden, in welches dann beispielsweise eine Person eintauchen kann. Auf einfache Weise kann die Vergrößerungseinrichtung dabei beispielsweise über wenigstens ein Federelement oder dgl. in die Rückhalteposition vergrößert werden, oder auch nur aus einem Federelement, beispielsweise einer Spiralfeder, bestehen. Ein Federelement hat dabei den großen Vorteil, eine Reversibilität des gesamten Rückhaltesystems bereitstellen zu können.

Dabei sind in weiterer Ausgestaltung der Erfindung aus Formgedächtnis- bzw. Memory-Werkstoffe, beispielsweise Memory-Metalllegierungen, für die Bauteile der Vergrößerungseinrichtung denkbar.

In weiterer Ausgestaltung der Erfindung ist das Rückhaltevolumen in der Rückhalteposition zumindest im Wesentlichen durch sich innerhalb der Umhüllung befindender Umgebungsluft gebildet. Mit anderen Worten wird das sich innerhalb der Umhüllung befindende Rückhaltevolumen bevorzugt durch Umgebungsluft gebildet, welche während der Verstellung der Vergrößerungseinrichtung entsprechend ins Innere der Umhüllung eingesaugt, eingeschlossen oder dgl. umhüllt wird.

Dies kann beispielsweise dadurch erfolgen, dass die Umhüllung wenigstens eine Einlassöffnung umfasst, über welche die Umgebungsluft bedingt durch die Verstellung der Vergrößerungseinrichtung bzw. des sich innerhalb der Umhüllung temporär bildenden Unterdrucks eingesaugt wird.

Darüber hinaus ist das Rückhaltevolumen bzw. die Umgebungsluft in weiterer Ausgestaltung der Erfindung über wenigstens eine Auslassöffnung aus der Umhüllung ablassbar, und zwar bevorzugt dann, wenn das Rückhaltesystem seine Rückhaltewirkung entfalten soll. Durch die Auslassöffnung kann somit auf einfache Weise die ausströmende Menge von Umgebungsluft und somit die Gesamtdämpfung des Rückhaltesystems gesteuert werden. Als weiterhin vorteilhaft hat es sich gezeigt, wenn das Rückhaltesystem reversibel bzw. mehrmals einsetzbar ausgebildet ist. Hierdurch ist es möglich, insbesondere bei einem entsprechenden Vorhersagesystem das Rückhaltesystem möglichst frühzeitig zu aktivieren, ohne dass dieses - wie heute üblich - anschließend ausgetauscht werden muss.

Denkbar ist es jedoch auch, beispielsweise den Gas- bzw. Luftsack und die Vergrößerungseinrichtung in einer lösbaren Vorrichtung unterzubringen, die leicht austauschbar ist und zudem - gegebenenfalls - regeneriert werden kann. Dabei wäre es beispielsweise denkbar, ein Patronen/Magazin-Prinzip - wie bei einem Drucker - einzusetzen.

Insbesondere durch die Möglichkeit zum reversiblen Einsatz des Rückhaltesystems hat sich dieses als besonders vorteilhaft zum Einsatz mit einem Vorhersagesystem gezeigt, mittels welchem beispielsweise bei einem Kraftwagen ein bevorstehender Unfall, Aufprall oder dgl. detektiert werden kann. In diesem Fall weist das Rückhaltesystem bevorzugt eine Einheit zur Kommunikation mit dem Vorhersagesystem auf, so dass das Rückhaltesystem entsprechend frühzeitig entfaltet werden kann. Ist die Gefahr dann vorüber, kann das Rückhaltesystem dann bevorzugter Weise reversibel zurückgestellt werden, um für den nächsten Notfall bereitzustehen.

Weiter vorteilhaft ist es, wenn das Rückhaltesystem auch durch den Benutzer selbst frühzeitig auslösbar ist. Hierdurch ist alternativ oder zusätzlich zu einem Vorhersagesystem, einer Sensorik oder dgl. eine weitere Möglichkeit geschaffen, das Rückhaltesystem auszulösen. Dies ist insbesondere dann denkbar, wenn ein Unfall, Aufprall oder dgl. mit hinreichender Vorlaufzeit erfolgt, wie beispielsweise bei einer Notlandung eines Flugzeugs. Insgesamt wird somit auf einfache Weise erreicht, dass das Rückhaltesystem frühzeitig in die Rückhalteposition vergrößert bzw. entfaltet wird, damit dieses frühzeitig vor dem Aufprall an Ort und Stelle ist.

In einer besonders einfachen Ausführung wäre es denkbar, dass die Überführung des Rückhaltesystems aus der Aufbewahrungsposition bzw. Aufbewahrungsausdehnung in die Rückhalteposition bzw. Rückhalteausdehnung - oder zurück - durch ziehharmonikaartiges Aufziehen zum Beispiel manuell erfolgt. Hierdurch kann beispielsweise auf Federelemente oder Stabelemente verzichtet werden. Zum leichten Aufziehen können eine oder mehrere aufgespannte Flächen vorteilhaft sein. Diese sind jedoch nicht zwingend erforderlich. Zum Aufspannen können Schlaufen oder ähnliches dienen, die gegebenenfalls auch zur Befestigung am Sicherheitsgurt oder ähnlichem dienen können.

Als außerdem vorteilhaft hat es sich gezeigt, wenn eine Halteeinrichtung vorgesehen ist, mittels welcher das Rückhaltesystem lösbar beispielsweise in einem Fahrgastraum zu positionieren ist. Hierdurch ist es beispielsweise möglich, ein individuell angepasstes Rückhaltesystem anzusetzen, welches durch den Benutzer dann beispielsweise in unterschiedliche Fahrgasträume mitgenommen werden kann. Es ist beispielsweise möglich, ein derartiges Rückhaltesystem sowohl in einem Zugabteil, einem Fahrgastraum eines Kraftwagens oder aber in einer Kabine eines Flugszeugs oder eines Helikopters mitzunehmen. Der Benutzer der Rückhaltesystems hat in diesem Fall lediglich Sorge zu tragen, dass das Rückhaltesystem mittels der Halteeinrichtung ordnungsgemäß positioniert ist, um die entsprechende Rückhaltefunktion gewährleisten zu können.

Ein weiteres Einsatzgebiet einer derartigen Halteeinrichtung ist es, dass diese beispielsweise lösbar an einem Sicherheitsgurt zu positionieren ist. Somit ist wiederum eine Möglichkeit geschaffen, ein individuelles Rückhaltesystem für den Notfall bereitzuhalten, welches beispielsweise auf die Körpergröße oder das Körpergewicht des Benutzers eingestellt ist.

Zur Unterstützung der Rückhaltefunktion des Rückhaltesystems bzw. des Rückhaltevolumens kann es in weiterer Ausgestaltung der Erfindung vorgesehen sein, dass eine Einrichtung zur zusätzlichen Gas- und/oder Wärmezufuhr vorgesehen ist, mittels welcher das Rückhaltevolumen insbesondere in der Rückhalteposition zu vergrößern ist. Mit anderen Worten ist es gegebenenfalls denkbar, eine kleine Gaskartusche oder eine kleiner Wärmequelle zusätzlich zu der Vergrößerungseinrichtung vorzusehen, um ein entsprechend zuverlässiges Rückhaltevolumen und einen höheren Innendruck bereitstellen zu können. Es ist ersichtlich, dass eine derartige Gas - und/oder Wärmequelle jedoch sehr klein gehalten werden kann, da die wesentliche Entfaltung bzw. Vergrößerung des Rückhaltevolumens durch die Vergrößerungseinrichtung erzielt werden soll.

Alternativ zu einer Gas - und/oder Wärmequelle wäre es auch denkbar, ein vergrößertes Rückhaltevolumen und/oder einen höheren Innendruck mechanisch durch den Benutzer zu erzeugen. Dies könnte beispielsweise durch einen Blasebalg, eine Luftpumpe oder dgl. erfolgen, wobei die Einlassöffnung der Umhüllung hierzu gegebenenfalls mit einem Rückschlagventil oder dgl. versehen sein könnte. Insgesamt kann durch eine derartige Vergrößerung des Rückhaltevolumens und/oder des Innendrucks eine noch bessere Rückhaltewirkung des Rückhaltesystems erreicht werden.

In weiterer Ausgestaltung der Erfindung hat es sich als zudem vorteilhaft gezeigt, wenn das Rückhaltevolumen durch eine Mehrzahl von einzelnen Volumensegmenten gebildet ist. Derartige Volumensegmente ermöglichen dabei auf einfache Weise, dass kein Durchschlagen des Benutzers durch das Rückhaltevolumen erfolgen kann. Vielmehr wird durch die Segmentierung eine besonders günstige Rückhaltefunktion erreicht. Zusätzlich kann die Rückhaltewirkung und Dämpfung jedes einzelnen Segments separat ausgelegt werden.

Die erfindungsgemäß im Zusammenhang mit dem Rückhaltesystem beschriebenen Vorteile gelten in eben solcher Weise für ein Transportmittel gemäß Anspruch 22, welches mit einem derartigen Rückhaltesystem ausgestattet ist. Das Rückhaltesystem kann dabei sowohl innerhalb des Fahrgastraums angeordnet sein, um beispielsweise die Funktion eines Airbags zu erfüllen, wie auch außerhalb des Kraftwagens, um beispielsweise den Fußgängerschutz bei einer Frontalkollision des Kraftwagens mit einem Fußgänger zu verbessern.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:

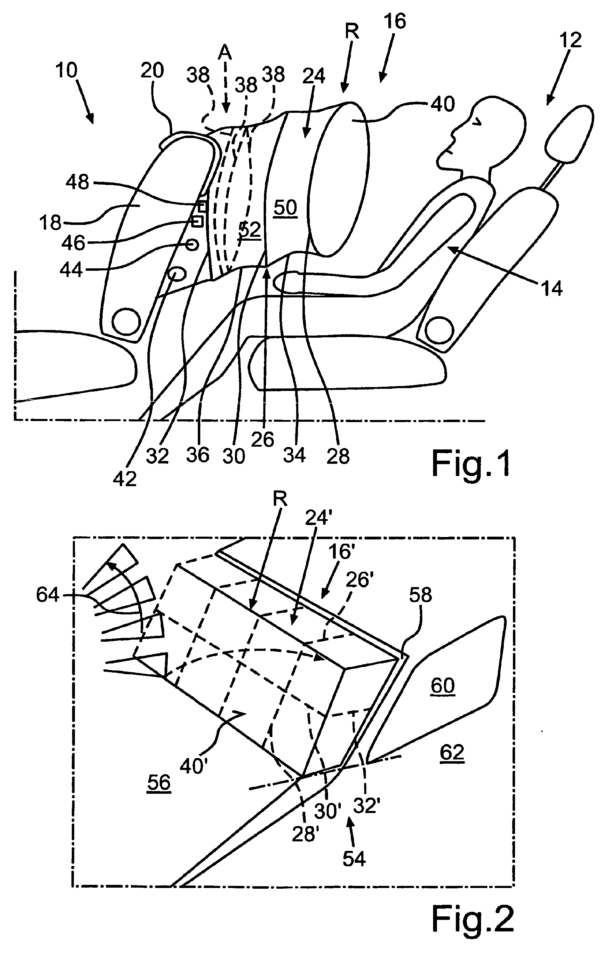

- Fig. 1: eine schematische Seitenansicht auf jeweils einen Fahrzeugsitz einer vorderen und hinteren Sitzreihe eines Kraftwagens, wobei einem auf dem hinteren Fahrzeugsitz positionierten Sitzinsassen ein Rückhaltesystem zugeordnet ist, dessen Rückhaltevolumen mittels einer mechanischen Vergrößerungseinrichtung aus einer nicht erkennbaren Aufbewahrungsposition in eine vorliegend dargestellte Rückhalteposition verstellt bzw. vergrößert worden ist;
- Fig. 2: eine schematische Perspektivansicht auf einen ausschnittsweise im Bereich einer Fronthaube und einer Windschutzscheibe dargestellten Personenkraftwagen, wobei sich zum Fußgängerschutz ein kissenartiges Rückhaltesystem ausgehend vom hinteren Ende der Fronthaube entlang der Windschutzscheibe erstreckt, wobei das Rückhaltevolumen des Rückhaltesystems vorliegend der durch eine mechanische Vergrößerungseinrichtung vergrößerten Rückhalteposition dargestellt ist,

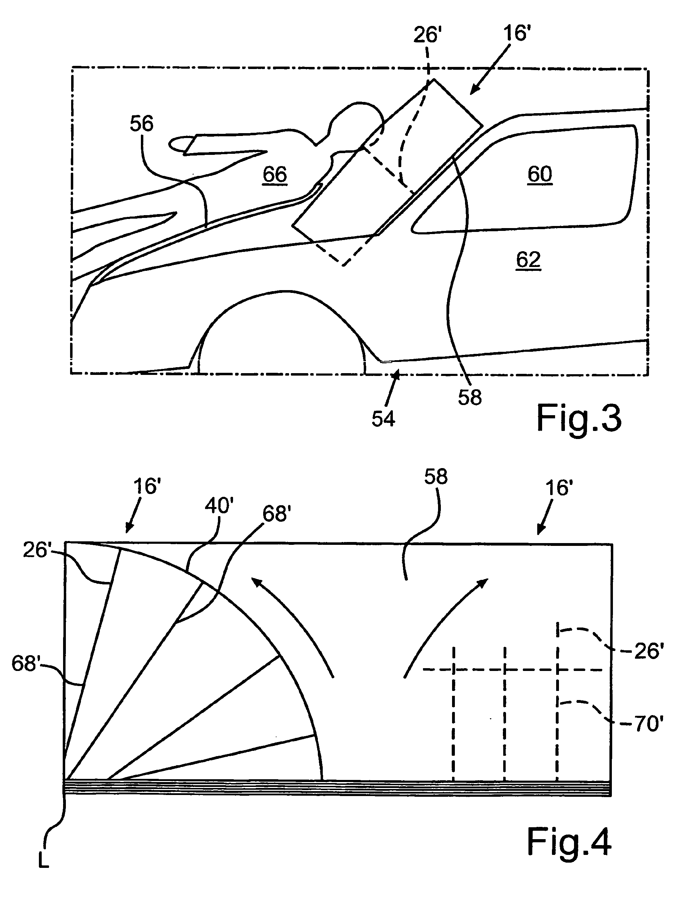

- Fig. 3: eine schematische Seitenansicht auf den ausschnittsweise erkennbaren Kraftwagen mit dem Rückhaltesystem gemäß Fig. 2; und in
- Fig. 4: eine schematische Vorderansicht auf die Windschutzscheibe des Kraftwagens gemäß den Figuren 2 und 3, wobei das Rückhaltesystem in alternativen Ausführungsformen gezeigt ist.

In Fig. 1 sind in einer schematischen Seitenansicht zwei hintereinander angeordnete Fahrzeugsitze 10, 12 in einer schematischen Seitenansicht erkennbar. Die beiden Fahrzeugsitze 10, 12 können einer jeweiligen vorderen und hinteren Sitzreihe eines Personenkraftwagens zugeordnet sein. Die beiden Fahrzeugsitze 10, 12 können alternativ auch bei einem anderen Kraftwagen oder Omnibus, sowie innerhalb eines Zugabteils angeordnet sein. Gleichfalls können die beiden Sitze 10, 12 auch innerhalb einer Kabine eines Flugzeugs positioniert sein.

Es ist erkennbar, dass sich auf dem hinteren Fahrzeugsitz 12 ein Sitzinsasse 14 befindet. Diesem Sitzinsassen 14 ist ein Rückhaltesystem 16 zugeordnet, welches vorliegend an der Rückseite einer Rückenlehne 18 beispielsweise mittels einer lösbaren Halteeinrichtung 20 positioniert ist.

Das Rückhaltesystem 18 umfasst ein durch eine Umhüllung 40 begrenztes Rückhaltevolumen 24, welches vorliegend in einer vergrößerten bzw. entfalteten Rückhalteposition R dargestellt ist.

Um diese Rückhalteposition R zu erreichen, umfasst das Rückhaltesystem 16 eine mechanische Vergrößerungseinrichtung 26, welche vorliegend eine Mehrzahl von hier kreisringförmigen Stabelementen 28, 30, 32, Rohren, Leisten oder dgl. umfasst. Die vorliegenden Stabelemente 28, 30, 32 sind vorliegend über jeweils eine Mehrzahl von Federelementen 34, 36 jeweils miteinander verbunden. Alternativ hierzu wäre es auch denkbar, beispielsweise eine große Spiralfeder oder dgl. als mechanische Vergrößerungseinrichtung einzusetzen. Als im Rahmen der Erfindung mit umfasst ist es dabei zu betrachten, dass auch andere Kombinationen von Feder- und/oder Stabelementen denkbar sind.

Durch diese Federelemente 34, 36 ist die Vergrößerungseinrichtung 26 aus einer mit gestrichelten Linien 38 dargestellten Aufbewahrungsposition A in die mit ausgezogenen Linien dargestellte Rückhalteposition R vergrößerbar bzw. ausfahrbar. Mit anderen Worten ist vorliegend eine mechanische Einrichtung in Form der Vergrößerungseinrichtung 26 geschaffen, mittels welcher das Rückhaltevolumen aus der Aufbewahrungsposition A in die Rückhalteposition R vergrößert bzw. verstellt werden kann. Dies erfolgt durch die geeignete Kombination von Stabelementen 28, 30, 32 oder dgl. und Federelementen 34, 36 oder dgl. Alternativ kann in einer Ausführung mindestens eine Spiralfeder, die die Funktion der Stab - und Federelemente in sich vereint, vorgesehen sein. Eine solche Funktion ist beispielsweise bei einer umlaufenden Spiralfeder gegeben.

Die Vergrößerungseinrichtung 26 mit den Stabelementen 28, 30, 32 und den Federelementen 34, 36 ist dabei von der Umhüllung 40 bespannt bzw. überdeckt, welche ihrerseits im Wesentlichen so ausgebildet ist, dass ein Einströmen eines Gases, insbesondere von Luft, ermöglicht, ein Ausströmen des eingeschlossenen Gases, insbesondere der eingeschlossenen Luft, beispielsweise nur verlangsamt möglich ist. Mit anderen Worten ist die Umhüllung 40 so ausgebildet, dass innerhalb dieser das vergrößerte Rückhaltevolumen 24 aufgenommen werden kann.

Dieses Rückhaltevolumen 24 ist im vorliegenden Fall durch umhüllte Umgebungsluft gebildet, welche beim Entfalten bzw. Vergrößern mittels der Vergrößerungseinrichtung 26 in den durch die Umhüllung 40 begrenzten Raum aufgenommen wird. Dabei ist es beispielsweise denkbar, dass beim Entfalten bzw. Vergrößern der Vergrößerungseinrichtung 26 die Umgebungsluft entsprechend angesaugt, eingeschlossen oder umhüllt werden kann. Im vorliegenden Ausführungsbeispiel ist hierzu beispielsweise eine Einlassöffnung 42 vorgesehen, über welche Umgebungsluft in das Innere der Umhüllung 40 gelangen kann. Dies erfolgt dadurch, dass beim Ausfahren der Vergrößerungseinrichtung 26 innerhalb der Umhüllung 40 ein

Unterdruck entsteht, über welchen Umgebungsluft entsprechend eingesaugt wird. Natürlich wäre hier auch ein Einschließen oder andersartiges Umhüllen von Umgebungsluft denkbar. Die Einlassöffnung kann auch zum Beispiel ein Rückschlagventil beinhalten und/oder als Ausströmöffnung dienen.

Das Rückhaltesystem 16 dient vorliegend unmittelbar zur Rückhaltung der Person 14 beispielsweise bei einem Unfall oder Aufprall. In diesem Fall wird durch die Vergrößerung des Rückhaltevolumens 24 in die Rückhalteposition R erreicht, dass der Sitzinsasse 14 entsprechend in das Rückhaltesystem 16 eintauchen kann. Das Rückhaltesystem 16 ist somit als Airbag ausgebildet bzw. wirkt als solcher. Durch den Innendruck des Rückhaltevolumens 24 bzw. der Umgebungsluft innerhalb der Umhüllung 40 wird dabei eine Energieabsorption bzw. Dämpfung der Bewegung des Sitzinsassen 14 in Richtung nach vorne gedämmt, welche dieser bei einer entsprechenden Kollision bzw. einem entsprechenden Aufprall durchläuft. Die Vergrößerungseinrichtung 26 ist insbesondere durch die Federelemente 34, 36 dabei derart nachgiebig ausgebildet, dass das Rückhaltesystem 16 seine Rückhaltewirkung entfalten kann. Gegebenenfalls kann die Vergrößerungseinrichtung 26 in einem gewissen Rahmen zur Rückhaltung der Person 14 beitragen.

Insgesamt ist aus Fig. 1 somit erkennbar, dass vorliegend eine Trennung zwischen der Entfaltungs- bzw. Vergrößerungsfunktion einerseits und der Rückhaltefunktion andererseits geschaffen ist. Die Entfaltungs- bzw. Vergrößerungsfunktion wird im Wesentlichen durch die Vergrößerungseinrichtung 26 erreicht, wobei durch die Federelemente 34, 36 ein entsprechendes Ausfahren der Vergrößerungseinrichtung 26 in Richtung nach hinten und auf den Sitzinsassen 14 zu erreicht wird. Die Rückhaltefunktion des Rückhaltesystems 16 wird hingegen - zumindest im Wesentlichen - durch das durch die Umhüllung 40 begrenzte Rückhaltevolumen 24 erreicht, welches mittels der Vergrößerungseinrichtung 26 zuvor entsprechend vergrößert worden ist. Dabei macht man sich die Trägheit des Rückhaltevolumens bzw. vorliegend der Umgebungsluft innerhalb der Umhüllung 40 zu Nutze.

Innerhalb der Umhüllung 40 kann dabei wenigstens eine Auslassöffnung 44 vorgesehen sein, über welche Umgebungsluft aus der Umhüllung 40 ausströmen bzw. ausgelassen werden kann, wenn der Sitzinsasse 14 auf das Rückhaltesystem auftrifft. Somit kann auf einfache Weise die Dämpfung bzw. Energieabsorption des Rückhaltesystems 16 eingestellt werden. Die wenigstens eine Auslassöffnung 44 kann dabei mit einem Verschluss versehen sein, welcher sich bei Überschreiten einer bestimmten Belastung, beispielsweise einem bestimmten Innendruck, öffnet. Die Öffnung kann dabei reversibel sein, beispielsweise durch eine federbeaufschlagte oder federnde Klappe. Auch eine irreversible Ausbildung, beispielsweise in Form einer Berstmembran oder dgl., des Verschlusses ist denkbar. Durch den Verschluss erreicht man dabei eine praktisch unbegrenzte Standzeit des Rückhaltevolumens 24 ohne auf die wichtige Dämpfung durch die Abströmöffnung 44 verzichten zu müssen. Diese Abströmung wird z.B. durch eine Beaufschlagung bzw. ein Auftreffen des Sitzinsassen/Benutzers auf das Rückhaltesystem 16 geöffnet.

Insbesondere in Verbindung mit einem Rückhaltesystem 16, welches durch den Benutzer aus der Aufbewahrungsposition bzw. Aufbewahrungsausdehnung in die Rückhalteposition bzw. Rückhalteausdehnung manuell aufgezogen werden kann, ergibt sich hierdurch beispielsweise im Flugzeug der Vorteil, dass bei einer Evakuierung, Rettung oder dgl. ein gegebenenfalls verbleibendes Rückhaltevolumen 24 leicht zusammengedrückt werden kann, um hierdurch eine Behinderung zu vermeiden. Ein leichtes Verstauen ist somit ebenfalls gewährleistet. Hierdurch kann beispielsweise auf Federelemente oder Stabelemente verzichtet werden. Zum leichten Aufziehen können eine oder mehrere aufgespannte Flächen vorteilhaft sein. Diese sind jedoch nicht zwingend erforderlich. Zum Aufspannen können Schlaufen oder ähnliches dienen, die gegebenenfalls auch zur Befestigung am Sicherheitsgurt oder ähnlichem dienen können.

Das vorliegende Rückhaltesystem 16 kann beispielsweise eine lediglich schematisch angedeutete Einheit 46 zur Kommunikation mit einem beispielsweise kraftwagenseitigen Vorhersagesystem umfassen, wobei mittels des Vorhersagesystems ein drohender Aufprall bzw. eine Kollision des Kraftwagens oder dgl. zu detektieren ist. Somit kann das Rückhaltesystem 16 frühzeitig in die Rückhalteposition R vergrößert bzw. entfaltet werden, damit dieses frühzeitig vor dem Aufprall an Ort und Stelle ist. Durch die Vergrößerungseinrichtung 26 ist dabei eine beliebig lange Standzeit möglich, ohne dass sich das Rückhaltevolumen 24 im Wesentlichen verringert. Durch die Vergrößerungseinrichtung 26 ist dabei eine langsame und ungefährliche Entfaltung des Rückhaltesystems 16 möglich. Somit kann mittels des Rückhaltesystems 16 eine vorausschauende Sensierung von bevorstehenden Unfällen entsprechend umgesetzt werden, um der zu schützenden Person eine entsprechende Rückhaltung zu bieten.

Eine derartige vorausschauende Sensierung des Rückhaltesystems 16 kann nicht nur bei Kraftwagen, Omnibussen oder Zügen eingesetzt werden, sondern vielmehr auch in der Schiff-, Luft- und Raumfahrt.

Weiter ist es denkbar, dass das Rückhaltesystem 16 auch durch den Benutzer selbst frühzeitig auslösbar ist. Hierdurch ist es möglich, dass kein Vorhersagesystem, keine Sensorik oder dgl. benötigt wird. Dies ist insbesondere dann denkbar, wenn ein Unfall, Aufprall oder dgl. mit hinreichender Vorlaufzeit erfolgt, wie beispielsweise bei einer Notlandung eines Flugzeugs. Insgesamt wird somit auf einfache Weise erreicht, dass das Rückhaltesystem 16 frühzeitig in die Rückhalteposition R vergrößert bzw. entfaltet wird, damit dieses frühzeitig vor dem Aufprall an Ort und Stelle ist.

Dem Rückhaltesystem 16 kann darüber hinaus eine lediglich symbolisch angedeutete Einrichtung 48 zur zusätzlichen Gas- und/oder Wärmezufuhr zugeordnet sein, mittels welcher das Rückhaltevolumen 24 beispielsweise in der Rückhalteposition R zusätzlich vergrößerbar ist. Mit anderen Worten kann über eine derartige Einrichtung 48 gegebenenfalls auch der Innendruck innerhalb der Umhüllung 40 in der Rückhalteposition R in gewissen Grenzen erhöht werden, beispielsweise, um eine besonders gute Rückhaltewirkung zu entfalten. Es ist jedoch klar, dass die wesentliche Vergrößerung des Rückhaltevolumens ausgehend von der Aufbewahrungsposition A in die Rückhalteposition R mittels der Vergrößerungseinrichtung 26 erfolgen soll.

Die in Fig. 1 erkennbare Halteeinrichtung 20 des Rückhaltesystems kann beispielsweise auch dazu genutzt werden, damit dieses an einem Sicherheitsgurt festgelegt werden kann.

Im vorliegenden Ausführungsbeispiel ist das Rückhaltevolumen 24 des Rückhaltesystems 16 in eine Mehrzahl von einzelnen Volumensegmenten 50, 52 unterteilt. Den einzelnen Volumensegmenten 50, 52 kann dabei jeweils eine eigene Umhüllung zugeordnet sein. Durch diese Segmentierung des Rückhaltevolumens 24 wird insbesondere erreicht, dass der Sitzinsasse 14 nicht bis zur Rückenlehne 18 durchschlagen kann. Vielmehr wird durch eine derartige Segmentierung eine besonders gute Rückhaltewirkung erzielt. Außerdem ist für jedes der Volumensegmente 50, 52 eine unterschiedliche Auslegung möglich.

In den Figuren 2 und 3 ist in einer schematischen Perspektivansicht bzw. einer schematischen Seitenansicht ausschnittsweise ein Kraftfahrzeug in Form eines Kraftwagens 54 ausschnittsweise dargestellt. Von dem Kraftwagen 54 ist dabei insbesondere eine Fronthaube 56, eine Windschutzscheibe 58 sowie eine vordere Seitenscheibe 60 einer korrespondierenden Seitenwand 62 erkennbar. In den Figuren 2 und 3 ist darüber hinaus erkennbar, dass die Fronthaube 56 mit ihrem hinteren Ende - wie durch den Pfeil 64 in Fig. 2 dargestellt - in eine angehobene Stellung gebracht worden ist, um die Erfordernisse des Fußgängerschutzes zu erfüllen. Der Aufprall eines Fußgängers 66 auf der Fronthaube 56 ist dabei aus Fig. 3 erkennbar.

Um nun einen Aufprall des Fußgängers 66 insbesondere mit dessen Kopf auf der Windschutzscheibe 58 zu vermeiden, ist vorliegend ein Rückhaltesystem 16' vorgesehen, welches in den Figuren 2 und 3 in der bereits entfalteten Rückhalteposition R dargestellt ist. Das Rückhaltesystem 16' weist dabei im Wesentlichen eine prismatische Grundkontur auf und erstreckt sich vom hinteren Ende der Fronthaube 56 über die annähernd gesamte Breite bzw. Höhe der Windschutzscheibe 58.

Die Entfaltung des Rückhaltesystems 16' erfolgt vorliegend wiederum mittels einer Vergrößerungseinrichtung 26', von welcher lediglich schematisch liniert einige Stabelemente 28', 30', 32' erkennbar sind. Die Stabelemente 28', 30', 32' sind wiederum über nicht weiter dargestellte Federelemente miteinander verbunden. Somit ist auch im vorliegenden Fall eine Vergrößerungseinrichtung 26' geschaffen, welche reversibel ausgebildet ist. Mit anderen Worten kann diese nach dem Gebrauch wieder zurückgestellt werden, damit diese neuerlich eingesetzt werden kann. Auch hier können wieder Stab- und Federelemente in einem ausgeführt sein, beispielsweise auch als stabförmige Blattfeder. Es ist klar, dass auch das vorliegende Rückhaltesystem 16' einer entsprechenden vorausschauenden Sensorik bzw. einem Vorhersagesystem zugeordnet sein kann, welches einen bevorstehenden Aufprall eines Fußgängers 66 detektiert. Damit der Kraftwagen 54 auch im Falle eines entfalteten Rückhaltesystems 16' lenkbar bleibt, ist beispielsweise denkbar, die Umhüllung 40' des Rückhaltesystems 16' durchsichtig zu gestalten. Somit bleibt auch bei in die Rückhalteposition R überführtem Rückhaltesystem 16 eine freie Sicht für den Fahrer nach vorne. In der nicht dargestellten Aufbewahrungsposition A versteckt sich das Rückhaltesystem 16' dann beispielsweise unterhalb der Fronthaube 56 bzw. unterhalb der Windschutzscheibe 58.

Schließlich sind in Fig. 4 zwei alternative Ausführungsformen des Rückhaltesystems 16' gemäß den Figuren 2 und 3 erkennbar. Fig. 4 zeigt dabei die Windschutzscheibe 58 in Vorderansicht. Ebenfalls in Vorderansicht gezeigt ist das linke Rückhaltesystem 16', welches viertelkreisförmig ausgebildet ist und eine Vergrößerungseinrichtung 26' umfasst, welche fächerartig zueinander angeordnete Stabelemente 68' umfasst. Die Stabelemente 68' sind in eine Fahrzeuglängsrichtung verlaufende Achse L schwenkbar bzw. unterhalb der Fronthaube 56 abklappbar. Demzufolge ist bei der Ausführungsform gemäß Fig. 4 die Umhüllung entsprechend kreissegmentförmig gestaltet.

Die in Fig. 4 gezeigte rechte Ausführungsform zeigt eine Vergrößerungseinrichtung 26', deren Stabelemente 70' alternativ angeordnet sind. Bei den Ausführungsbeispielen vor der Windschutzscheibe ist es denkbar, entsprechend gestaltete Scheibenwischer oder deren Motoren zur Entfaltung zu nutzen.

Insgesamt ist somit aus den Figuren 2 bis 4 erkennbar, dass ein Rückhaltesystem 16' zur außenseitigen Anordnung an dem Kraftwagen 54 geschaffen ist, mittels welchem ein Beitrag zum Fußgängerschutz geleistet ist. Dabei ist wiederum mittels der Vergrößerungseinrichtung 26' die Vergrößerung bzw. Entfaltung des Rückhaltesystems 16' von dessen Rückhaltewirkung getrennt, welche im Wesentlichen durch den Innendruck entsteht, der sich innerhalb der Umhüllung 40' ergibt.

Als im Rahmen der Erfindung mit umfasst ist es zu betrachten, dass die im Zusammenhang mit Fig. 1 beschriebenen technischen Ausgestaltungen und Merkmale auch auf die Ausführungsformen gemäß den Figuren 2 bis 4 anwendbar sind.

Denkbare Einsatzfelder für derartige Rückhaltesysteme sind nicht nur Fahrgasträume oder Außenseiten von Kraftwagen. Die beschriebenen Rückhaltesysteme 16, 16' eignen sich auch als einfache und kostengünstige Möglichkeit, alle Passagiere von Flugzeugen entsprechend zu schützen. Dabei kann beispielsweise das Rückhaltesystem 16 in die Rückenlehne des vorderen Sitzplatzes integriert sein. Ein weiteres Beispiel ist ein mechanisches Airbagkissen, welches transportabel ist und auf die Beine gelegt werden kann. Dieses ist ohne Aufwand nachrüstbar. Eine Bereitstellung ist somit sowohl durch Fluggesellschaften - ähnlich einer Schwimmweste - oder auch durch den Insassen selbst - über den Einzelhandel - möglich.

Bei Helikoptern kann hierdurch ein Schutz für Insassen vor zu hohen Beschleunigungen insbesondere in Vertikalrichtung geschaffen werden, wobei die Rückhaltesysteme 16, 16' unter dem Insassen bzw. dem Helikopter platziert werden können.

Gleichfalls wäre es denkbar, Ladungen durch ein derartiges Rückhaltesystem 16, 16' vor einer übermäßigen Beschleunigung bzw. Beschädigung zu schützen.

Als im Rahmen der Erfindung mit umfasst ist es zu betrachten, dass derartige Rückhaltesysteme 16, 16' auch transportabel ausgebildet sein könnten. So wäre es beispielsweise denkbar, diese zum Schutz vor einem Aufprall beispielsweise bei einer Leiter oder einem Kindersitz einzusetzen. Ebenfalls wäre es denkbar, derartige Rückhaltesysteme 16, 16' in der Raumfahrt einzusetzen. Dabei könnten insbesondere Kapseln vor der Landung durch ein entsprechend frühzeitig ausgefahrenes Rückhaltesystem 16, 16' entsprechend rückgehalten werden. Ein derartiger Schutz stellt dann eine mittelbare Rückhaltung der jeweiligen Person bzw. des jeweiligen Ladeguts dar.

Ebenfalls als im Rahmen der Erfindung mit umfasst ist es zu betrachten, dass das Rückhaltesysteme 16, 16' auch zur Ladegutsicherung bzw. Ladegutrückhaltung ausgebildet sein kann, um beispielsweise Ladegut innerhalb eines Stauraums zu sichern bzw. um die Fahrzeuginsassen vor Verletzungen durch das Ladegut zu schützen.

Schließlich wäre es auch denkbar, das Rückhaltesystem 16, 16' als Lawinenschutzelement ausgebildet ist. Dieses bietet einem Skifahrer die Chance - durch das sich innerhalb der Umhüllung 40 befindende Gas/Luft - in einer Lawine möglichst weit oben zu bleiben. Die Wirkung des Rückhaltesystems 16, 16' beruht nicht auf Schwimmen im klassischen Sinn, da das spezifische Gewicht eines Skifahrers selbst mit aufgeblasenen Rückhaltesystem 16, 16' größer ist als das von fließendem Schnee. so dass der Skifahrer nach den Gesetzen der Hydrostatik auch mit aufgeblähtem Rückhaltesystem 16, 16' in einer Lawine untergehen müsste. Dass das Rückhaltesystem 16, 16' trotzdem die erwünschte Wirkung hat, ist mit einem Sortierungseffekt zu erklären, und zwar deshalb, weil eine Lawine, die sich aus Schneebrocken verschiedener Größe zusammensetzt, physikalisch ein strömendes Granulat ist. Unter dem Einfluss der Schwerkraft geschieht eine Entmischung, durch die große Partikel eher an die Oberfläche, kleinere eher in die unteren Schichten gelangen. Durch das Rückhaltesystem 16, 16' wird somit ein großes Teil geschaffen, das von diesem Sortierungseffekt profitiert und mit größerer Wahrscheinlichkeit an der Lawinenoberfläche positionier wird.

Das Rückhaltesystem 16, 16' ist schließlich gegebenenfalls auch als Schwimmhilfe nutzbar. Es ist klar, dass einzelne Schutzfunktionen gegebenenfalls auch durch ein- und dasselbe Rückhaltesystem 16, 16' verwirklicht sein können.

## Patentansprüche

1. Rückhaltesystem mit einem durch eine Umhüllung (40, 40') begrenzten Rückhaltevolumen (24, 24'), welches aus einer Aufbewahrungsposition (A) in eine Rückhalteposition (R) vergrößerbar ist, in welcher das Rückhaltevolumen (24, 24') zumindest mittelbar zur Rückhaltung einer Person (14, 66), eines Gegenstandes oder dergleichen dient,
**dadurch gekennzeichnet,**
**dass** die Vergrößerung aus der Aufbewahrungsposition (A) in die Rückhalteposition (R) ohne Beteiligung eines Gasgenerators mittels wenigstens eines Federelementes (34, 36) oder manuell erfolgt.

2. Rückhaltesystem nach Anspruch 1,
**dadurch gekennzeichnet,**
**dass** die manuelle Vergrößerung durch Aufziehen einer Fläche oder durch Aufspannen mittels Schlaufen erfolgt.

3. Rückhaltesystem nach Anspruch 1 oder 2,
**dadurch gekennzeichnet,**
**dass** eine Vergrößerungseinrichtung (26, 26') zur Vergrößerung des Rückhaltevolumens (24, 24') aus einer Aufbewahrungsposition (A) in eine Rückhalteposition (R) ein Federelement (34, 36), ein Stabelement, ein Rohr, eine Leiste oder dergleichen in gerader, gebogener oder geknickter Form, oder eine Mehrzahl von Stabelementen (28, 30, 32, 28', 30', 32'), Rohren, Leisten oder dergleichen gerader, gebogener oder geknickter Form umfasst, über welchen die Umhüllung (40, 40') angeordnet ist.

4. Rückhaltesystem nach einem der Ansprüche 1 bis 3,
**dadurch gekennzeichnet,**
**dass** die Umhüllung (40, 40') durchsichtig gestaltet ist.

5. Rückhaltesystem nach einem der Ansprüche 1 bis 4,
**dadurch gekennzeichnet,**
**dass** das Rückhaltevolumen (24, 24') in der Rückhalteposition (R) zumindest im Wesentlichen durch sich innerhalb der Umhüllung (40, 40') befindender Umgebungsluft gebildet ist.

6. Rückhaltesystem nach Anspruch 5,
**dadurch gekennzeichnet,**
**dass** die Umgebungsluft bei der Vergrößerung des Rückhaltevolumens (24, 24') aus der Aufbewahrungsposition (A) in die Rückhalteposition (R) innerhalb der Umhüllung (40, 40') einbringbar ist.

7. Rückhaltesystem nach einem der Ansprüche 5 oder 6,
**dadurch gekennzeichnet,**
**dass** die Umhüllung (40, 40') mit wenigstens einer Einlassöffnung (42) für die Umgebungsluft versehen ist.

8. Rückhaltesystem nach Anspruch 7,
**dadurch gekennzeichnet,**
**dass** die Einlassöffnung (42) einem Ventil, insbesondere einem Rückschlagventil, zugeordnet ist.

9. Rückhaltesystem nach einem der Ansprüche 1 bis 8,
**dadurch gekennzeichnet,**
**dass** das Rückhaltevolumen (24, 24') bzw. die Umgebungsluft über wenigstens eine Auslassöffnung (44) aus der Umhüllung (40, 40') auslassbar ist.

10. Rückhaltesystem nach Anspruch 9,
**dadurch gekennzeichnet,**
**dass** die wenigstens eine Auslassöffnung (44) der Umhüllung (40, 40') mit einem Verschluss versehen ist, welcher sich bei Überschreiten einer bestimmten Belastung öffnet.

11. Rückhaltesystem nach einem der Ansprüche 1 bis 10,
**dadurch gekennzeichnet,**
**dass** das Rückhaltesystem (16, 16') reversibel bzw. mehrmals einsetzbar ausgebildet ist.

12. Rückhaltesystem nach einem der Ansprüche 1 bis 11,
**dadurch gekennzeichnet,**
**dass** das Rückhaltesystem (16, 16') von dem Benutzer selbst auslösbar ist.

13. Rückhaltesystem nach einem der Ansprüche 1 bis 12,
**dadurch gekennzeichnet,**
**dass** dieses eine Einheit (46) zur Kommunikation mit einem Vorhersagesystem umfasst, mittels welchem beispielsweise ein bevorstehender Unfall, Aufprall oder dergleichen zu ermitteln ist.

14. Rückhaltesystem nach einem der Ansprüche 1 bis 13,
**dadurch gekennzeichnet,**
**dass** eine Halteeinrichtung (20) vorgesehen ist, mittels welcher das Rückhaltesystem (16) lösbar beispielsweise in einem Fahrgastraum zu positionieren ist.

15. Rückhaltesystem nach einem der Ansprüche 1 bis 14,
**dadurch gekennzeichnet,**
**dass** eine Halteeinrichtung (20) vorgesehen ist, mittels welcher das Rückhaltesystem (16) vorzugsweise lösbar an einem Sicherheitsgurt zu positionieren ist.

16. Rückhaltesystem nach einem der Ansprüche 1 bis 15,
**dadurch gekennzeichnet,**
**dass** eine Einrichtung (48) zur zusätzlichen Gas- und/oder Wärmezufuhr vorgesehen ist, mittels welcher das Rückhaltevolumen (24, 24') und/oder der Innendruck zusätzlich vergrößerbar sind.

17. Rückhaltesystem nach einem der Ansprüche 1 bis 16,
**dadurch gekennzeichnet,**
**dass** das Rückhaltevolumen (24, 24') durch eine Mehrzahl von einzelnen Volumensegmenten (50, 52) gebildet ist.

18. Rückhaltesystem nach Anspruch 17,
**dadurch gekennzeichnet,**
**dass** den einzelnen Volumensegmenten (50, 52) jeweils eine Umhüllung (40, 40') zugeordnet ist.

19. Rückhaltesystem nach einem der Ansprüche 1 bis 18,
**dadurch gekennzeichnet,**
**dass** die Umhüllung (40, 40') und eine oder die Vergrößerungseinrichtung (26, 26') zur Vergrößerung des Rückhaltevolumens (24, 24') aus einer Aufbewahrungsposition (A) in eine Rückhalteposition (R) in einer austauschbaren und gegebenenfalls regenerierbaren Vorrichtung anordnenbar ist.

20. Rückhaltesystem nach einem der Ansprüche 1 bis 19,
**dadurch gekennzeichnet,**
**dass** dieses zur Ladegutsicherung bzw. Ladegutrückhaltung ausgebildet ist.

21. Rückhaltesystem nach einem der Ansprüche 1 bis 20,
**dadurch gekennzeichnet,**
**dass** dieses als Lawinenschutzelement und/oder als Schwimmhilfe ausgebildet ist.

22. Transportmittel, insbesondere Kraftfahrzeug, Kraftwagen, Flugzeug, Raumfahrzeug, Schienenfahrzeug oder dergleichen mit einem innerhalb oder außerhalb des Transportmittels angeordneten Rückhaltesystem (16, 16') nach einem der Ansprüche 1 bis 21.

## Claims

1. Restraint system having a restraint volume (24, 24') bounded by a covering (40, 40') and capable of being increased from a stowage position (A) to a restraint position (R) in which the restraint volume (24, 24') is used at least indirectly to restrain a person (14, 66), an object or the like,
**characterised in that**
the increase from the stowage position (A) to the restraint position (R) is achieved without the involvement of a gas generator by means of at least one spring element (34, 36) or manually.

2. Restraint system according to claim 1,
**characterised in that**
the manual increase is achieved by pulling up a surface or by tensioning by means of loops.

3. Restraint system according to claim 1 or 2,
**characterised in that**
an increasing device (26, 26') for increasing the restraint volume (24, 24') from a stowage position (A) to a restraint position (R) comprises a rod element, a tube, a rail or the like, which may be straight, bent or kinked, or a plurality of rod elements (28, 30, 32, 28', 30' 32'), tubes, rails or the like of a straight, bent or kinked design, above which the cover (40, 40') is located.

4. Restraint system according to any of claims 1 to 3,
**characterised in that**
the cover (40, 40') is designed to be transparent.

5. Restraint system according to any of claims 1 to 4,
**characterised in that**
the restraint volume (24, 24') is in the restraint position (R) at least substantially represented by ambient air present within the cover (40, 40').

6. Restraint system according to claim 5,
**characterised in that**
the ambient air can be introduced within the cover (40, 40') while the restraint volume (24, 24') is increased from the stowage position (A) to the restraint position (R).

7. Restraint system according to claim 5 or 6,
**characterised in that**
the cover (40, 40') is provided with at least one inlet (42) for the ambient air.

8. Restraint system according to claim 7,
**characterised in that**
the inlet (4) is assigned to a valve, in particular a non-return valve.

9. Restraint system according to any of claims 1 to 8,
**characterised in that**
the restraint volume (24, 24') or the ambient air can be discharged from the cover (40, 40') via at least one outlet (44).

10. Restraint system according to claim 9,
**characterised in that**
the at least one outlet (44) of the cover (40, 40') is provided with a closure which opens if a defined load is exceeded.

11. Restraint system according to any of claims 1 to 10,
**characterised in that**
the restraint system (16, 16') is designed reversible or for multiple use.

12. Restraint system according to any of claims 1 to 11,
**characterised in that**
the restraint system (16, 16') can be triggered by the user him- or herself.

13. Restraint system according to any of claims 1 to 12,
**characterised in that**
that it includes a unit (46) for communication with a predicting device by means of which an imminent accident, collision or the like can be detected.

14. Restraint system according to any of claims 1 to 13,
**characterised in that**
a holding device (20) is provided, by means of which the restraint system (16) can be releasably positioned, for example in a passenger compartment.

15. Restraint system according to any of claims 1 to 14,
**characterised in that**
a holding device (20) is provided, by means of which the restraint system (16) can be releasably positioned, preferably on a seat belt.

16. Restraint system according to any of claims 1 to 15,
**characterised in that**
a device (48) for additional gas and/or heat supply is provided, by means of which the restraint volume (24, 24') and/or the internal pressure can be increased further.

17. Restraint system according to any of claims 1 to 16,
**characterised in that**
the restraint volume (24, 24') is represented by a plurality of individual volume segments (50, 52).

18. Restraint system according to claim 17,
**characterised in that**
a cover (40, 40') is assigned to each of the individual volume segments (50, 52).

19. Restraint system according to any of claims 1 to 18,
**characterised in that**
the cover (40, 40') and an or the increasing device (26, 26') for increasing the restraint volume (24, 24') from a stowage position (A) to a restraint position (R) can be located in a replaceable and possibly regenerable device.

20. Restraint system according to any of claims 1 to 19,
**characterised in that**
it is designed for the security or the restraint of loads.

21. Restraint system according to any of claims 1 to 20,
**characterised in that**
it is designed as an avalanche protection element and/or as a swimming aid.

22. Means of transport, in particular motor vehicle, car, aeroplane, spacecraft, rail vehicle or the like, comprising a restraint system (16, 16') according to any of claims 1 to 21 which is fitted inside or outside the means of transport.

## Revendications

1. Système de retenue comprenant un volume de retenue (24, 24') délimité par une enveloppe (40, 40') et pouvant être augmenté d'une position de rangement (A) à une position de retenue (R), dans laquelle le volume de retenue (24, 24') sert au moins indirectement à retenir une personne (14, 66), un objet ou analogue, **caractérisé en ce que** l'agrandissement de la position de rangement (A) à la position de retenue (R) s'effectue sans participation d'un générateur de gaz au moyen d'au moins un élément ressort (34, 36) ou manuellement.

2. Système de retenue selon la revendication 1, **caractérisé en ce que** l'agrandissement manuel s'effectue par étirement d'une surface ou par serrage au moyen de boucles.

3. Système de retenue selon la revendication 1 ou 2, **caractérisé en ce qu'**un dispositif d'agrandissement (26, 26') servant à agrandir le volume de retenue (24, 24') d'une position de rangement (A) à une position de retenue (R) comprend un élément ressort (34, 36), un élément barre, un tube, une baguette ou analogue sous forme droite, courbée ou pliée, ou une pluralité de barres (28, 30, 32, 28', 30', 32'), de tubes, de baguettes ou analogue sous forme droite, courbée ou pliée sur lesquels l'enveloppe (40, 40') est disposée.

4. Système de retenue selon l'une quelconque des revendications de 1 à 3, **caractérisé en ce que** l'enveloppe (40, 40') est transparente.

5. Système de retenue selon l'une quelconque des revendications de 1 à 4, **caractérisé en ce que** le volume de retenue (24, 24') est formé dans la position de retenue (R) au moins essentiellement par l'air environnant se trouvant à l'intérieur de l'enveloppe (40, 40').

6. Système de retenue selon la revendication 5, **caractérisé en ce que** l'air environnant lors de l'agrandissement du volume de retenue (24, 24') de la position de rangement (A) à la position de retenue (R) peut être introduit à l'intérieur de l'enveloppe (40, 40').

7. Système de retenue selon l'une quelconque des revendications 5 ou 6, **caractérisé en ce que** l'enveloppe (40, 40') est pourvue d'au moins une ouverture d'entrée (42) pour l'air environnant.

8. Système de retenue selon la revendication 7, **caractérisé en ce que** l'ouverture d'entrée (42) est associée à un clapet, en particulier un clapet anti-retour.

9. Système de retenue selon l'une quelconque des revendications de 1 à 8, **caractérisé en ce que** le volume de retenue (24, 24') ou l'air environnant peut être évacué de l'enveloppe (40, 40') par au moins une ouverture de sortie (44).

10. Système de retenue selon la revendication 9, **caractérisé en ce que** l'au moins une ouverture de sortie (44) de l'enveloppe (40, 40') est pourvue d'une fermeture qui s'ouvre lorsqu'une certaine contrainte est dépassée.

11. Système (3) de retenue selon l'une quelconque des revendications précédentes de 1 à 10, **caractérisé en ce que** le système de retenue (16, 16') est réversible ou peut être utilisé plusieurs fois.

12. Système de retenue selon l'une quelconque des revendications précédentes de 1 à 11, **caractérisé en ce que** le système de retenue (16, 16') peut être déclenché par l'utilisateur lui-même.

13. Système de retenue selon l'une quelconque des revendications de 1 à 12, **caractérisé en ce que** celui-ci comprend une unité (46) pour communiquer avec un système prédictif qui peut détecter par exemple un accident, un choc imminent ou analogue.

14. Système de retenue selon l'une quelconque des revendications précédentes de 1 à 13, **caractérisé en ce qu'**il est prévu un dispositif de maintien (20) qui permet de positionner de manière amovible le système de retenue (16) par exemple dans l'habitacle.

15. Système de retenue selon l'une quelconque des revendications précédentes de 1 à 14, **caractérisé en ce qu'**il est prévu un dispositif de maintien (20) qui permet de positionner de manière amovible le système de retenue sur une ceinture de sécurité.

16. Système de retenue selon l'une quelconque des revendications précédentes de 1 à 15, **caractérisé en ce qu'**il est prévu un dispositif (48) servant à l'apport supplémentaire en gaz et / ou en chaleur, lequel permet d'augmenter davantage le volume de retenue (24, 24') et / ou la pression interne.

17. Système de retenue selon l'une quelconque des revendications précédentes de 1 à 16, **caractérisé en ce que** le volume de retenue (24, 24') est formé par une pluralité de segments de volume (50, 52) individuels.

18. Système de retenue selon la revendication 17, **caractérisé en ce que** chacun des segments de volume (50, 52) est associé à une enveloppe (40, 40').

19. Système de retenue selon l'une quelconque des revendications de 1 à 18, **caractérisé en ce que** l'enveloppe (40, 40') et un ou le dispositif d'agrandissement (26, 26') servant à agrandir le volume de retenue (24, 24') d'une position de rangement (A) à une position de retenue (R) peut être placé dans un dispositif remplaçable ou le cas échéant pouvant être régénéré.

20. Système (3) de retenue selon l'une quelconque des revendications précédentes de 1 à 19, **caractérisé en ce que** celui-ci est conçu pour maintenir une charge ou pour retenir une charge.

21. Système (3) de retenue selon l'une quelconque des revendications précédentes de 1 à 20, **caractérisé en ce que** celui-ci est conçu comme élément de protection contre les avalanches et / ou comme moyen de flottaison.

22. Moyen de transport en particulier véhicule automobile, véhicule, avion, vaisseau spatial, véhicule sur rails ou analogue doté d'un système de retenue (16, 16') placé à l'intérieur ou à l'extérieur du moyen de transport selon l'une quelconque des revendications 1 à 21.
